# EUROPÄISCHE PATENTSCHRIFT

(11) **EP 1 781 919 B1**
(45) Veröffentlichungstag und Bekanntmachung des Hinweises auf die Patenterteilung: **10.10.2012**
(21) Anmeldenummer: 05774744.6
(22) Anmeldetag: 05.08.2005
(51) Int. Cl.: F02D 41/00, F02D 41/06

(54) **VERFAHREN ZUM START EINER BRENNKRAFTMASCHINE**
METHOD FOR STARTING AN INTERNAL COMBUSTION ENGINE
PROCEDE POUR FAIRE DEMARRER UN MOTEUR A COMBUSTION INTERNE

(30) Priorität: 19.08.2004 DE 102004040708
(43) Veröffentlichungstag der Anmeldung: 09.05.2007
(73) Patentinhaber: AUDI AG, 85045 Ingolstadt (DE); IAV GmbH Ingenieurgesellschaft Auto und Verkehr, 10587 Berlin (DE)
(72) Erfinder: BECKER, Bernd, 38116 Braunschweig (DE); KLEIN, Holger, 85051 Ingolstadt (DE)
(74) Vertreter: Mader, Wilfried
(86) Internationale Anmeldenummer: PCT/EP2005/008495
(87) Internationale Veröffentlichungsnummer: WO 2006/018153

(56) Entgegenhaltungen:
- EP-A- 1 255 033
- DE-A1- 10 255 345
- DE-A1- 10 335 152
- US-A1- 2004 244 779
- US-B1- 6 467 466

## Beschreibung

Die Erfindung betrifft ein Verfahren zum Start einer Brennkraftmaschine gemäß dem Oberbegriff des Patentanspruches 1.

Es ist bekannt, dass für den Antrieb von Kraftfahrzeugen zunehmend alternative Konzepte diskutiert werden. Die Gegenwart ist geprägt von einem Übergang der allein mit Otto- oder Dieselkraftstoffen betriebenen Brennkraftmaschine zu bivalenten Antriebskonzepten.

In der DE 32 33 935 A1 ist eine Otto-Brennkraftmaschine dargestellt, welche alternativ mit Otto- oder LPG-Kraftstoff betrieben werden kann. Es ist ein Umschalter vorgesehen, mit welchem zwischen dem Betrieb mit Otto- und LPG-Kraftstoff gewechselt werden kann.

Die DE 102 55 345 A1 zeigt ein Verfahren und eine Vorrichtung zur Abschätzung einer LPG-Kraftstoffzusammensetzung. Es wird darin ein Fahrzeugantrieb mit Dualmodus-Kraftstoffsystem beschrieben, welcher sowohl Otto- als auch LPG-Kraftstoff verwendet. Der Start der Brennkraftmaschine erfolgt im allgemeinen mit Ottokraftstoff. Nach dem Start wird der LPG-Kraftstoff verwendet.

Wenn jedoch eine bivalent betriebene Brennkraftmaschine im Betrieb mit gasförmigem Kraftstoff abgestellt wurde oder gasförmiger Kraftstoff in die Ansaugstrecke gelangt, können bei einem folgenden Start mit Ottokraftstoff verlängerte Startzeiten auftreten. Die Ursache dafür ist der Anteil an gasförmigem Kraftstoff in der Ansauganlage der Brennkraftmaschine. Das bei einem folgenden Start angesaugte Kraftstoff-Luft-Gemisch weist einen Anteil des aus dem vorherigen Betrieb der Brennkraftmaschine vorhandenen gasförmigen Kraftstoffs und einen Anteil des zusätzlich eingebrachten flüssigen Ottokraftstoffs auf. Die Summe dieser beiden Anteile führt zu ungünstigen Bedingungen für einen Start der Brennkraftmaschine.

Aufgabe der vorliegenden Erfindung ist es, den Start einer Brennkraftmaschine ohne vermeidbare Verzögerungen zu ermöglichen.

Erfindungsgemäß wird dazu die Berechnungsgrundlage zur Ermittlung des Kraftstoffanteils erweitert, welcher der von der Brennkraftmaschine angesaugten Luft zugemessen werden soll. Der Anteil an gasförmigem Kraftstoff in der Ansauganlage wird zunächst aus mehreren Einzelfaktoren ermittelt. Es wird weiterhin ein Adaptionsfaktor, welcher Änderungen der Undichtigkeit der Injektoren während der Standzeit der Brennkraftmaschine beschreibt, in die Ermittlung des Anteils an gasförmigem Kraftstoff in der Ansauganlage eingebunden. In Abhängigkeit des Anteils an gasförmigem Kraftstoff in der Ansauganlage werden die ersten Kraftstoffeinspritzungen korrigiert oder derart verzögert, dass sich ein für den Start der Brennkraftmaschine optimales Kraftstoff-Luft-Gemisch im Brennraum einstellt.

Von Vorteil an diesem Verfahren ist es, dass eine flexible Berechnungsgrundlage zur Ermöglichung eines verzögerungsfreien Starts einer Brennkraftmaschine unter einer Vielzahl von Bedingungen bereitgestellt wird. Es ist günstig, dass frei parametrierbare Konstanten zur Berücksichtigung einer systematischen Undichtigkeit der Injektoren bei der Ermittlung des Anteils an gasförmigem Kraftstoff in der Ansauganlage eingebunden sind und dass diese Konstanten die Betriebsart berücksichtigen, bei welcher die Brennkraftmaschine abgestellt wurde. Außerdem ist es von Vorteil, dass ein Adaptionsfaktor, welcher Änderungen der Undichtigkeit der Injektoren während der Standzeit der Brennkraftmaschine beschreibt, in die Ermittlung des Anteils an gasförmigem Kraftstoff in der Ansauganlage integriert ist.

Die zu Grunde liegende Brennkraftmaschine verfügt vorzugsweise über ein Dualmodus-Kraftstoffsystem und es ist sowohl ein Betrieb der Brennkraftmaschine mit Otto- als auch LPG-Kraftstoff möglich. Denkbar ist auch eine Anwendung des erfindungsgemäßen Verfahrens ebenfalls für eine Brennkraftmaschine, welche ausschließlich mit gasförmigem Kraftstoff betrieben wird.

Weitere vorteilhafte Ausgestaltungen sind in den Unteransprüchen beschrieben, sie werden zusammen mit ihren Wirkungen erläutert.

Beispielhaft wird hier die Anwendung des erfindungsgemäßen Verfahrens beschrieben. In den dazugehörigen Figuren zeigen:
- Fig. 1:: eine Übersicht der Bildung des Anteils an zuzumessendem Kraftstoff,
- Fig. 2:: eine Übersicht der Zusammensetzung des Korrekturfaktors beim Start,
- Fig. 3:: eine Übersicht des funktionalen Zusammenhangs zwischen der Anzahl an bereits erfolgten Kraftstoffeinspritzungen und einem Einzelfaktor,
- Fig. 4:: eine Übersicht der Addition der Anzahl an zu verzögernden Kraftstoffeinspritzungen und der Anzahl an bereits erfolgten Kraftstoffeinspritzungen,
- Fig. 5:: eine Übersicht der Ermittlung des Anteils an gasförmigem Kraftstoff in der Ansauganlage.

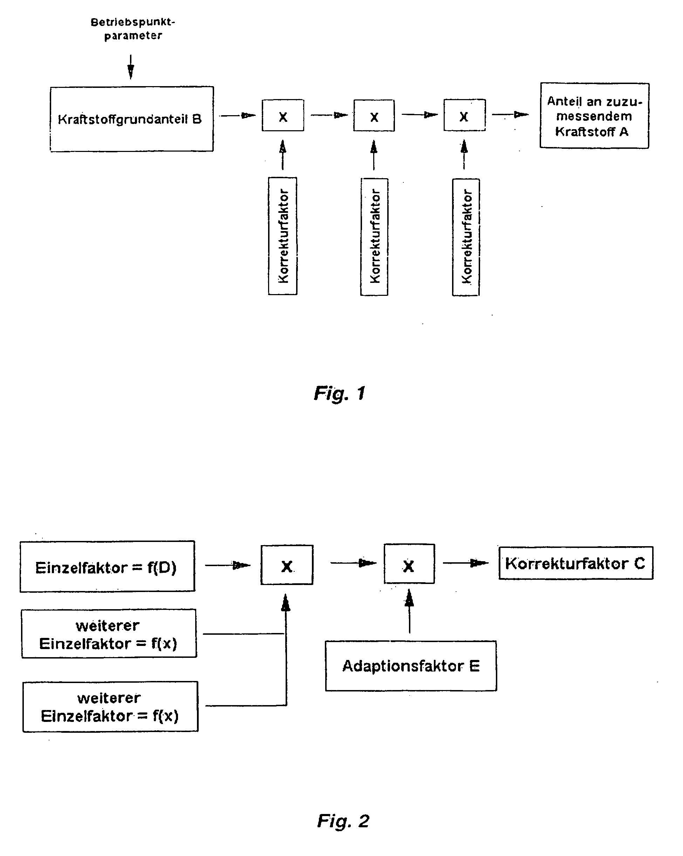

Bei der Berechnung des Anteils an zuzumessendem Kraftstoff **A** für eine Brennkraftmaschine mittels eines bekannten Motorsteuerungssystems wird angestrebt, alle Einflussgrößen, die Auswirkungen auf die effektive Zusammensetzung des Kraftstoff-Luft-Gemisches im Brennraum haben, einzeln zu beschreiben. Wie in **Figur 1** gezeigt, wird der Anteil an zuzumessendem Kraftstoff **A** aus einem Kraftstoffgrundanteil **B** gebildet. Der Kraftstoffgrundanteil **B** kann für jeden Betriebspunkt der Brennkraftmaschine in Abhängigkeit von entsprechenden Betriebspunktparametern für einen stöchiometrischen Betrieb der Brennkraftmaschine in einem Kennfeld abgelegt sein und wird um weitere Faktoren korrigiert.

Die Korrekturfaktoren beschreiben die besonderen Betriebsbedingungen der Brennkraftmaschine wie etwa bei dem Start, bei dem Warmlauf oder bei möglichen Lastwechseln. Während des Starts der Brennkraftmaschine wird der Kraftstoffgrundanteil **B** um den Korrekturfaktor **C** korrigiert.

Wie in **Figur 2** dargestellt, setzt sich der Korrekturfaktor **C** wiederum aus einer Reihe von Einzelfaktoren zusammen. Diese Einzelfaktoren beschreiben den Startzustand der Brennkraftmaschine beispielsweise unter Berücksichtigung der Temperaturverhältnisse. Ein Einzelfaktor berücksichtigt die Anzahl der bereits erfolgten Kraftstoffeinspritzungen **D.** Weiterhin wird ein Adaptionsfaktor **E** in die Berechnung des Korrekturfaktors **C** einbezogen.

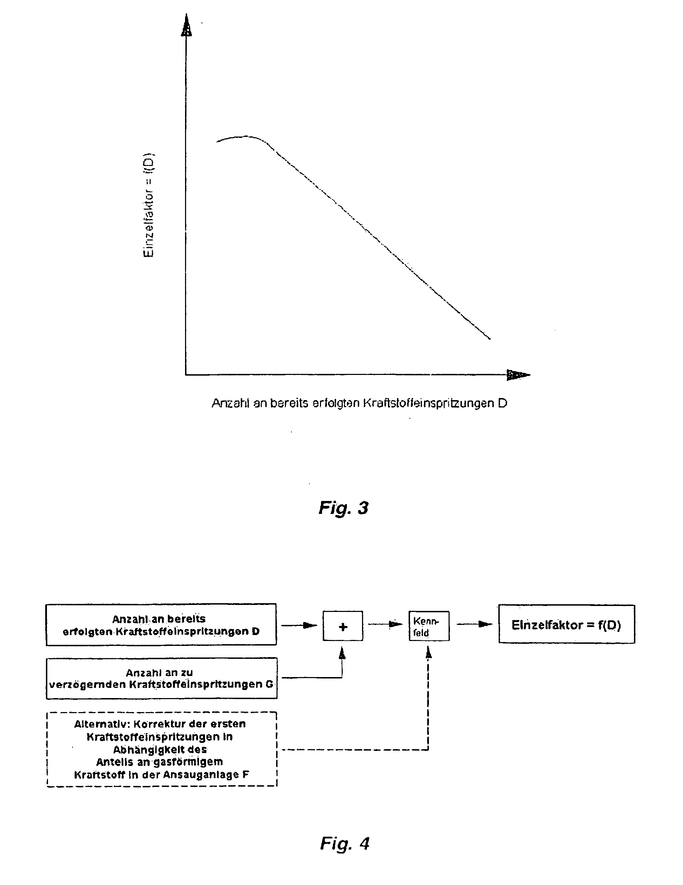

Entsprechend der Anzahl der bereits erfolgten Kraftstoffeinspritzungen **D** wird eine Abregelung des Korrekturfaktors **C** über der Startzeit durchgeführt. Wie in **Figur 3** gezeigt wird dazu im Verlauf des Starts mit steigender Anzahl an bereits erfolgten Kraftstoffeinspritzungen **D** letztendlich kleiner werdender Einzelfaktor = f(**D**) bereitgestellt.

Der Adaptionsfaktor **E** wird auf Grundlage einer Verbrennungsauswertung während des Starts gebildet. Entsprechend dieser Verbrennungsauswertung, welche einen Rückschluss darauf zulässt, ob das Kraftstoff-Luft-Gemisch während des Starts zu mager, zu fett oder ausreichend war, wird der Adaptionsfaktor **E** um einen vorbestimmten Wert inkrementiert, dekrementiert oder beibehalten. Der aktuelle Adaptionsfaktor **E** wird gespeichert und bei einem weiteren Start der Berechnung des Korrekturfaktors **C** zu Grunde gelegt.

Um den Anteil an gasförmigem Kraftstoff in der Ansauganlage **F einer** Brennkraftmaschine beim Start zu berücksichtigen, wird die Berechnungsgrundlage des Korrekturfaktors **C** erweitert. Grundgedanke dabei ist es, die ersten Kraftstoffeinspritzungen in Abhängigkeit des Anteils an gasförmigem Kraftstoff in der Ansauganlage **F** derart zu verzögern oder zu korrigieren, dass sich ein für den Start optimales Kraftstoff-Luft-Gemisch im Brennraum einstellt. Wie in **Figur 4** dargestellt, wird dazu eine Anzahl an zu verzögernden Kraftstoffeinspritzungen **G** zu der Anzahl an bereits erfolgten Kraftstoffeinspritzungen **D** hinzuaddiert. Auf diese Weise wird entsprechend des in **Figur 3** gezeigten funktionalen Zusammenhangs eine beschleunigte Abregelung des Korrekturfaktors **C** mit Beginn des Starts erreicht. Alternativ ist es möglich, in Abhängigkeit des Anteils an gasförmigem Kraftstoff in der Ansauganlage **F** die ersten Kraftstoffeinspritzungen zu korrigieren.

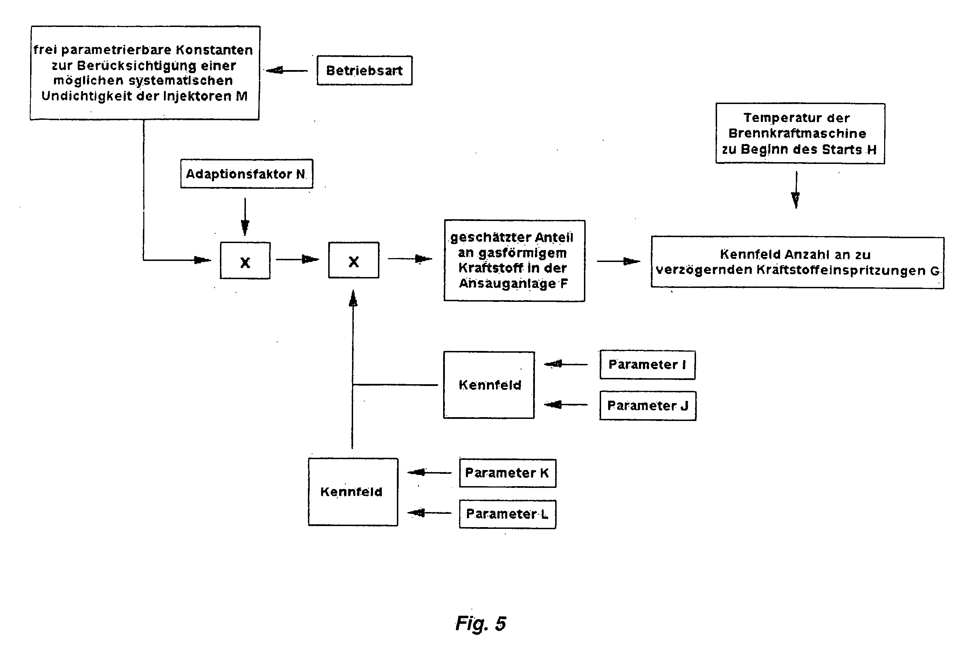

Die Anzahl an zu verzögernden Kraftstoffeinspritzungen **G** wird, wie in **Figur 5** dargestellt, einem Kennfeld entnommen, welches neben der Temperatur der Brennkraftmaschine zu Beginn des Starts **H** den Anteil an gasförmigem Kraftstoff in der Ansauganlage **F** als Parameter verfügt.

Der Anteil an gasförmigem Kraftstoff in der Ansauganlage **F** wird entsprechend **Figur 5** aus mehreren Einzelfaktoren ermittelt. Die Einzelfaktoren werden zwei Kennfeldern entnommen. Die Parameter dieser Kennfelder sind die Temperatur der Brennkraftmaschine beim vorherigen Abstellen **I**, die Temperaturdifferenz zwischen Kraftstoff und Injektor **J,** die Zeit **K,** welche seit dem Abstellen der Brennkraftmaschine vergangen ist und der Kraftstoffdruck **L** der Brennkraftmaschine. Weiterhin sind frei parametrierbare Konstanten zur Berücksichtigung einer möglichen systematischen Undichtigkeit der Injektoren **M** zur Ermittlung des Anteils an gasförmigem Kraftstoff in der Ansauganlage **F** vorgesehen. Diese berücksichtigen die Betriebsart, bei welcher die Brennkraftmaschine abgestellt wurde.

Außerdem wird ein Adaptionsfaktor, welcher mögliche Änderungen der Undichtigkeit der Injektoren während der Standzeit der Brennkraftmaschine beschreibt **N,** in die Ermittlung des Anteils an gasförmigem Kraftstoff in der Ansauganlage **F** eingebunden. Der Adaptionsfaktor, welcher mögliche Änderungen der Undichtigkeit der Injektoren während der Standzeit der Brennkraftmaschine beschreibt **N** wird aus dem aktuellen Adaptionsfaktor **E** abgeleitet. Auf diese Weise wird beispielsweise eine langsam zunehmende Undichtigkeit der Injektoren über die Standzeit der Brennkraftmaschine schon zu Beginn eines Starts der Brennkraftmaschine in Form einer beschleunigten Abregelung des Korrekturfaktors **C** erreicht.

Dadurch, dass der Adaptionsfaktor, welcher mögliche Änderungen der Undichtigkeit der Injektoren während der Standzeit der Brennkraftmaschine beschreibt **N,** in die Ermittlung des Anteils an gasförmigem Kraftstoff in der Ansauganlage **F** eingebunden wird sowie aus dem aktuellen Adaptionsfaktor **E** abgeleitet ist und schon zu Beginn eines Starts der Brennkraftmaschine in Form einer beschleunigten Abregelung des Korrekturfaktors **C** beitragen kann, sollte bei der Bildung des Adaptionsfaktors **E** auf Grundlage einer Verbrennungsauswertung und weiteren Randbedingungen entschieden werden, ob für einen weiteren Start der Brennkraftmaschine der Adaptionsfaktor **E** zurückgesetzt werden soll, ob der aktuell ermittelte Adaptionsfaktor **E** nicht gespeichert werden soll und ob der Adaptionsfaktor, welcher mögliche Änderungen der Undichtigkeit der Injektoren während der Standzeit der Brennkraftmaschine beschreibt **N,** aktualisiert werden soll.

Das wird dadurch ermöglicht, dass auf Grundlage einer Verbrennungsauswertung die Anzahl der Zylinderfüllungen, bis eine erste Verbrennung des Kraftstoff-Luft-Gemisches erfolgt ist, aufsummiert wird und dass je nach Wert dieser Summe unter Berücksichtigung des aktuellen Adaptionsfaktors **E,** der Kenntnis der aktuellen Anzahl an zu verzögernden Kraftstoffeinspritzungen **G** und dem aktuellen Anteil an gasförmigem Kraftstoff in der Ansauganlage **F** im Vergleich zu einem maximal möglichen Anteil an gasförmigem Kraftstoff in der Ansauganlage **F'** durch eine Gegenüberstellung dieser Werte mit frei parametrierbaren Kennwerten entschieden wird, ob für einen weiteren Start der Brennkraftmaschine der Adaptionsfaktor **E** zurückgesetzt wird, ob der aktuell ermittelte Adaptionsfaktor **E** nicht gespeichert wird und ob der Adaptionsfaktor, welcher mögliche Änderungen der Undichtigkeit der Injektoren während der Standzeit der Brennkraftmaschine beschreibt **N,** aktualisiert wird.

### Bezugszeichenliste

- **A**: Anteil an zuzumessendem Kraftstoff
- **B**: Kraftstoffgrundanteil
- **C**: Korrekturfaktor
- **D**: Anzahl der bereits erfolgten Kraftstoffeinspritzungen
- **E**: Adaptionsfaktor
- **F**: Anteil an gasförmigem Kraftstoff in der Ansauganlage
- **F'**: maximal möglicher Anteil an gasförmigem Kraftstoff in der Ansauganlage
- **G**: Anzahl an zu verzögernden Kraftstoffeinspritzungen
- **H**: Temperatur der Brennkraftmaschine zu Beginn des Starts
- **I**: Temperatur der Brennkraftmaschine beim vorherigen Abstellen
- **J**: Temperaturdifferenz zwischen Kraftstoff und Injektor
- **K**: Zeit, welche seit dem Abstellen der Brennkraftmaschine vergangen ist
- **L**: Kraftstoffdruck der Brennkraftmaschine
- **M**: frei parametrierbare Konstante zur Berücksichtigung einer möglichen systematischen Undichtigkeit der Injektoren
- **N**: Adaptionsfaktor, welcher mögliche Änderungen der Undichtigkeit der Injektoren während der Standzeit der Brennkraftmaschine beschreibt

## Patentansprüche

1. Verfahren zum Start einer Brennkraftmaschine mit einem Motorsteuerungssystem, mit einer Berechnungsgrundlage zur Ermittlung des für den Start einer Brennkraftmaschine optimalen Kraftstoffanteils, welcher der von der Brennkraftmaschine angesaugten Luft zugemessen wird,
**dadurch gekennzeichnet,**
**dass** in Abhängigkeit des vor dem Start vorhandenen Anteils an gasförmigem Kraftstoff in der Ansauganlage **F** die Zumessung an Kraftstoff beeinflusst wird.

2. Verfahren nach Anspruch 1,
**dadurch gekennzeichnet,**
**dass** die Zumessung an Kraftstoff korrigiert oder verzögert wird.

3. Verfahren nach Anspruch 1 und 2,
**dadurch gekennzeichnet,**
**dass** der Anteil an gasförmigem Kraftstoff aus mehreren Einzelfaktoren, frei parametrierbaren Konstanten **M** und einem Adaptionsfaktor **N** gebildet wird.

4. Verfahren nach Anspruch 3,
**dadurch gekennzeichnet,**
**dass** die Einzelfaktoren Kennfeldern entnommen werden.

5. Verfahren nach Anspruch 4,
**dadurch gekennzeichnet,**
**dass** die Parameter dieser Kennfelder die Temperatur der Brennkraftmaschine beim vorherigen Abstellen **I,** die Temperaturdifferenz zwischen Kraftstoff und Injektor **J,** die Zeit **K,** welche seit dem Abstellen der Brennkraftmaschine vergangen ist und der Kraftstoffdruck **L** der Brennkraftmaschine sind.

6. Verfahren nach Anspruch 3 bis 5,
**dadurch gekennzeichnet,**
**dass** die frei parametrierbaren Konstanten **M** eine mögliche systematische Undichtigkeit der Mittel zum Zumessen von Kraftstoff beschreiben.

7. Verfahren nach Anspruch 3 bis 6,
**dadurch gekennzeichnet,**
**dass** frei parametrierbare Konstanten **M** für jede Betriebsart, bei welcher die Brennkraftmaschine betrieben werden kann, vorgesehen sind.

8. Verfahren nach Anspruch 3 bis 7,
**dadurch gekennzeichnet,**
**dass** die frei parametrierbaren Konstanten **M** je nach der Betriebsart, bei welcher die Brennkraftmaschine abgestellt wurde, wirksam sind.

9. Verfahren nach Anspruch 3 bis 8,
**dadurch gekennzeichnet,**
**dass** der Adaptionsfaktor **N** mögliche Änderungen der Undichtigkeit der Mittel zum Zumessen von Kraftstoff während der Standzeit der Brennkraftmaschine beschreibt.

10. Verfahren nach Anspruch 3 bis 9,
**dadurch gekennzeichnet,**
**dass** der Adaptionsfaktor **N** aus dem aktuellen Adaptionsfaktor **E** abgeleitet wird.

11. Verfahren nach Anspruch 2 bis 10,
**dadurch gekennzeichnet,**
**dass** zur Verzögerung der Zumessung an Kraftstoff eine Anzahl an zu verzögernden Kraftstoffeinspritzungen **G** zu der Anzahl an bereits erfolgten Kraftstoffeinspritzungen **D** hinzuaddiert wird.

12. Verfahren nach Anspruch 2 bis 11,
**dadurch gekennzeichnet,**
**dass** die Anzahl an zu verzögernden Kraftstoffeinspritzungen **G** einem Kennfeld entnommen wird.

13. Verfahren nach Anspruch 12,
**dadurch gekennzeichnet,**
**dass** die Parameter dieses Kennfeldes die Temperatur der Brennkraftmaschine zu Beginn des Starts **H** und der Anteil an gasförmigem Kraftstoff in der Ansauganlage **F** sind.

14. Verfahren nach Anspruch 3 bis 13,
**dadurch gekennzeichnet,**
**dass** auf Grundlage einer Verbrennungsauswertung die Anzahl der Zylinderfüllungen, bis eine erste Verbrennung des Kraftstoff-Luft-Gemisches erfolgt ist, bestimmt wird und das je nach Wert dieser Summe unter Berücksichtigung des aktuellen Adaptionsfaktors **E,** der Kenntnis der aktuellen Anzahl an zu verzögernden Kraftstoffeinspritzungen **G** und des aktuellen Anteils an gasförmigem Kraftstoff in der Ansauganlage **F** im Vergleich zu einem maximal möglichen Anteil an gasförmigem Kraftstoff in der Ansauganlage **F'** durch eine Gegenüberstellung dieser Werte mit frei parametrierbaren Kennwerten entschieden wird, ob für einen weiteren Start der Brennkraftmaschine der Adaptionsfaktor **E** zurückgesetzt wird, ob der aktuell ermittelte Adaptionsfaktor **E** nicht gespeichert wird und ob der Adaptionsfaktor, welcher mögliche Änderungen der Undichtigkeit der Injektoren während der Standzeit der Brennkraftmaschine beschreibt **N,** aktualisiert wird.

## Claims

1. Method for starting an internal combustion engine having an engine control system, comprising a calculation basis for determining the optimum proportion of fuel for starting an internal combustion engine, which is apportioned to the air taken in by the internal combustion engine, **characterised in that** the apportionment of fuel is influenced as a function of the proportion of gaseous fuel which is available before start-up in the intake assembly F.

2. Method according to claim 1, **characterised in that** the apportionment of fuel is corrected or slowed.

3. Method according to claim 1 and claim 2, **characterised in that** the proportion of gaseous fuel is formed from a plurality of individual factors, freely parametrisable constants M and an adaptation factor N.

4. Method according to claim 3, **characterised in that** the individual factors are derived from characteristic maps.

5. Method according to claim 4, **characterised in that** the parameters of said characteristic maps are the temperature of the internal combustion engine upon previous stopping I thereof, the temperature difference between the fuel and the injector J, the time K which has elapsed since the internal combustion engine was stopped and the fuel pressure L of the internal combustion engine.

6. Method according to claims 3 to 5, **characterised in that** the freely parametrisable constants M define a possible systematic leakage of the means for apportioning fuel.

7. Method according to claims 3 to 6, **characterised in that** freely parametrisable constants M are provided for each operating mode in which the internal combustion engine can be operated.

8. Method according to claims 3 to 7, **characterised in that** the freely parametrisable constants M are effective depending on the operating mode in which the internal combustion engine has been stopped.

9. Method according to claims 3 to 8, **characterised in that** the adaptation factor N defines possible modifications to the leakage of the means for apportioning fuel during the service life of the internal combustion engine.

10. Method according to claims 3 to 9, **characterised in that** the adaptation factor N is derived from the current adaptation factor E.

11. Method according to claims 2 to 10, **characterised in that**, for slowing the apportionment of fuel, a quantity of fuel injections G to be slowed are added to the quantity of fuel injections D which have already been carried out.

12. Method according to claims 2 to 11, **characterised in that** the quantity of fuel injections G to be slowed are derived from a characteristic map.

13. Method according to claim 12, **characterised in that** the parameters of said characteristic map are the temperature of the internal combustion engine at the beginning of the start-up H and the proportion of gaseous fuel in the intake assembly F.

14. Method according to claims 3 to 13, **characterised in that**, on the basis of a combustion evaluation, the quantity of cylinder charges until a first combustion of the fuel-air mixture occurs is determined, and **in that**, depending on the value of this total, taking into account the current adaptation factor E, the information on the current quantity of fuel injections G to be slowed and on the current proportion of gaseous fuel in the intake assembly F compared with a maximum possible proportion of gaseous fuel in the intake assembly F', it is decided, by comparing these values with freely parametrisable characteristic values, whether the adaptation factor E is reset for further start-up of the internal combustion engine, whether or not the currently determined adaptation factor E is stored and whether the adaptation factor which defines possible modifications to the leakage of the injectors during the service life of the internal combustion engine, N is updated.

## Revendications

1. Procédé de démarrage d'un moteur à combustion interne ayant un système de commande de moteur, comprenant une base de calcul pour la détermination de la proportion de carburant optimale pour le démarrage d'un moteur à combustion interne qui est dosée à l'air aspiré par le moteur à combustion interne,
**caractérisé en ce que**
le dosage de carburant est influencé en fonction de la proportion de carburant gazeux présente avant le démarrage dans l'installation d'admission F.

2. Procédé selon la revendication 1,
**caractérisé en ce que**
le dosage de carburant est corrigé ou retardé.

3. Procédé selon les revendications 1 et 2,
**caractérisé en ce que**
la proportion de carburant gazeux est formée à partir de plusieurs facteurs individuels, de constantes M librement paramétrables et d'un facteur d'adaptation N.

4. Procédé selon la revendication 3,
**caractérisé en ce que**
les facteurs individuels sont prélevés dans des champs caractéristiques.

5. Procédé selon la revendication 4,
**caractérisé en ce que**
les paramètres de ces champs caractéristiques sont la température du moteur à combustion interne lors de l'arrêt I précédent, la différence de température entre le carburant et l'injecteur J, le temps K qui s'est écoulé depuis l'arrêt du moteur à combustion interne et la pression de carburant L du moteur à combustion interne.

6. Procédé selon les revendications 3 à 5,
**caractérisé en ce que**
les constantes M librement paramétrables décrivent un possible défaut d'étanchéité systématique des moyens pour le dosage de carburant.

7. Procédé selon les revendications 3 à 6,
**caractérisé en ce que**
les constantes M librement paramétrables sont prévues pour chaque mode de fonctionnement dans lequel le moteur à combustion interne peut fonctionner.

8. Procédé selon les revendications 3 à 7,
**caractérisé en ce que**
les constantes M librement paramétrables sont respectivement actives selon le mode de fonctionnement dans lequel le moteur à combustion interne a été arrêté.

9. Procédé selon les revendications 3 à 8,
**caractérisé en ce que**
le facteur d'adaptation N décrit de possibles variations du défaut d'étanchéité des moyens pour le dosage de carburant pendant le temps d'arrêt du moteur à combustion interne.

10. Procédé selon les revendications 3 à 9,
**caractérisé en ce que**
le facteur d'adaptation N est dérivé du facteur d'adaptation E actuel.

11. Procédé selon les revendications 2 à 10,
**caractérisé en ce que**,
pour le retardement du dosage de carburant, un nombre d'injections de carburant G à retarder est ajouté au nombre d'injections de carburant D déjà effectuées.

12. Procédé selon les revendications 2 à 11,
**caractérisé en ce que**
le nombre d'injections de carburant G à retarder est prélevé dans un champ caractéristique.

13. Procédé selon la revendication 12,
**caractérisé en ce que**
les paramètres de ce champ caractéristique sont la température du moteur à combustion interne au début du démarrage H et la proportion de carburant gazeux dans l'installation d'admission F.

14. Procédé selon les revendications 3 à 13,
**caractérisé en ce que**,
sur la base d'une analyse de la combustion, le nombre de charges de cylindre jusqu'à la survenue d'une première combustion du mélange carburant-air est déterminé, et **en ce que**, selon chaque valeur de cette somme, en prenant en compte du facteur d'adaptation E actuel, la connaissance du nombre actuel d'injections de carburant G à retarder et la proportion actuelle de carburant gazeux dans l'installation d'admission F par rapport à une proportion possible de carburant gazeux dans l'installation d'admission F', il est décidé, par une comparaison de ces valeurs avec des valeurs caractéristiques librement paramétrables, si, pour un autre démarrage du moteur à combustion interne, le facteur d'adaptation E est remis à l'état initial, si le facteur d'adaptation E actuellement déterminé n'est pas enregistré et si le facteur d'adaptation N qui décrit de possibles variations du défaut d'étanchéité des injecteurs pendant le temps d'arrêt du moteur à combustion interne est actualisé.
